# EUROPEAN PATENT APPLICATION

(11) **EP 1 158 825 A2**
(43) Date of publication of application: **28.11.2001**
(21) Application number: 01304539.8
(22) Date of filing: 23.05.2001
(51) Int. Cl.: H04Q 7/32, H04Q 7/38

(54) **Cellular communications device**

(30) Priority: 24.05.2000 GB 0012691
(71) Applicant: Dataflex Design Communications Limited, Sutton, Surrey SM1 1JB (GB)
(72) Inventor: O'Prey, Gerry, Detaflex Design Communication Ltd., Sutton, Surrey SM1 1JB (GB)
(74) Representative: Beresford, Keith Denis Lewis

(57) **Abstract**

A communications system for routing calls originating in a cellular communications network of the system. A cellular communications device, e.g. a mobile telephone, appends a stored access code to a user-selected number and transmits the resulting modified number to the cellular communications network. The SIM of the communications device receives a user-selected number from a controller of the cellular communications device, appends the stored access code to the selected number, and returns the modified number to the processor of the cellular communications device for transmission to the network. The call is then routed in dependence upon the appended access code. The call can be routed to a routing switch when then determines an appropriate route for the call.

## Description

The present invention relates to the routing of calls originating in a cellular communications network. The present invention is applicable to, but not limited to, calls originating from within cellular communications systems or networks compliant with standards such as the Global System for Mobile Communications (GSM), and also the Universal Mobile Telecommunication System (UMTS) currently under standardisation.

In a cellular communications system, the area over which service is provided is divided into a number of smaller areas called cells. Typically each cell is served from a base transceiver station (BTS) which has a corresponding antenna or antennas for transmission to and reception from a user station, normally a mobile station such as a mobile telephone. An established cellular radio communication standard is GSM (Global System for Mobile Communications). A further harmonised standard currently being defined is the Universal Mobile Telecommunications system (UMTS).

A user of a mobile telephone can select a number to be called by any one of a number of inputting steps. One is to dial or key-in a number digit-by-digit. Another is to input an instruction for a previously-stored number or a previously-dialled number, to be called. Any of these input instructions can be performed via a keyboard, or in the case of certain mobile telephones via a voice-activation process. In the present specification the terminology 'select a number' is to be understood as encompassing any one or any combination of these possibilities.

In conventional arrangements when the user selects a number and the mobile telephone calls that number by transmitting a call request for that number to a switching component (in the case of a GSM network this is typically a Mobile Services Switching Centre (MSC)) of the cellular network, the switching component then connects the call to the Public Switched Telephone Network (PSTN) which itself further connects the call to either a direct subscriber of the PSTN itself (i.e. a PSTN receiver) or on to further telecommunications networks as required in order to reach the final selected destination.

According to one aspect the present invention provides a mobile terminal, for example a mobile telephone, for use with a cellular communications network, comprising means for allowing a user to input a number to be called, means for adding a stored access code to the number to be called, and means for transmitting the access code and the number to be called to the cellular communications network.

According to another aspect the present invention provides a mobile telephone, comprising a processor for controlling operation of the mobile telephone, and a SIM, the SIM comprising means for interfacing with the processor of the mobile telephone to receive digits of a number to be called from the processor, and means for prefixing a routing code to the number to be called, and means for returning the routing code attached to the number to be called to the processor, the mobile telephone further comprising means for initiating a call in the cellular communications network using the routing code attached to the number to be called.

According to a further aspect the present invention provides a subscriber identification module (SIM) card for a mobile telephone, the SIM card comprising a stored routing prefix, means for receiving some or all of the digits of a user-selected number from the mobile telephone, means for adding the routing prefix to the received number to provide a modified number, and means for forwarding the modified number to the mobile telephone so that the mobile telephone can initiate a call using the modified number.

Embodiments of the present invention will now be described by way of example only, with reference to the accompanying drawings, in which:
Figure 1 is a schematic illustration of a communications arrangement having a number of possible connection routes for calls originating in a first cellular communications network;
Figure 2 is a schematic illustration of a mobile telephone which is operable to initiate a call requiring routing over the communications arrangement of Figure 1;
Figure 3 is a schematic illustration of a subscriber identification module (SIM) forming part of the mobile telephone shown in Figure 2;
Figure 4 is a schematic illustration showing details of the first cellular network;
Figure 5 is a schematic illustration of a routing switch which forms part of the communications arrangement shown in Figure 1;
Figure 6 is a flow diagram illustrating a process for routing a call via the routing switch;
Figure 7 is a flow diagram illustrating a further process for routing a call via the routing switch in which the original call is connected to a further call set up by the routing switch;
Figure 8 is a flow diagram illustrating a process for routing a call via the routing switch in which a new call from the routing switch to the calling mobile telephone is connected to a call set up from the routing switch to the called party; and
Figure 9 is a flow diagram illustrating a process for routing a call in which the routing is determined by the mobile telephone of Figure 2 and SIM of Figure 3.

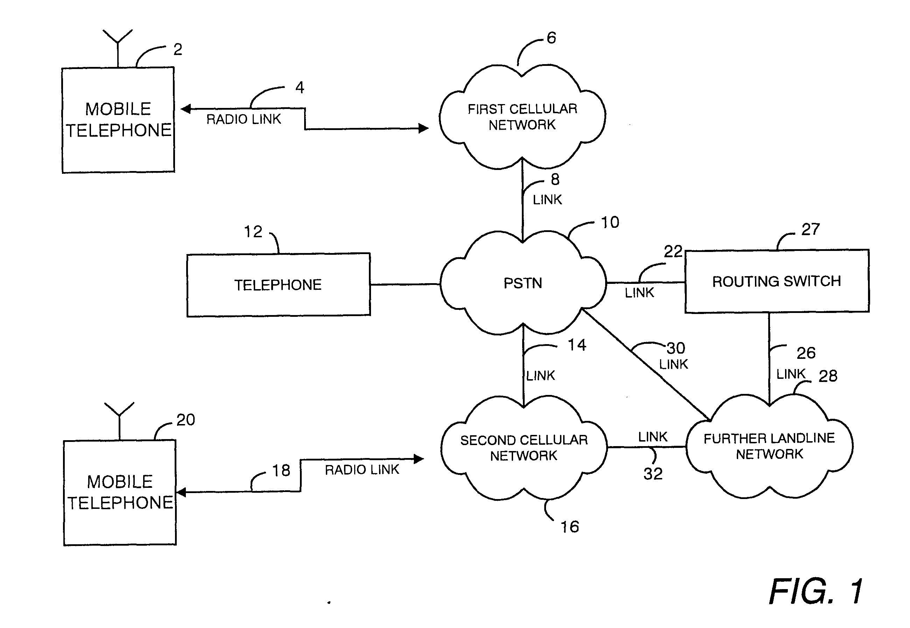

Figure 1 schematically illustrates a communications system with a number of possible connection routes. A first cellular network 6 (e.g. Vodafone) provides service to a large number of user stations. For the sake of clarity one example of such user stations is shown, namely a mobile telephone 2. The mobile telephone 2 receives service from the first cellular network 6 via a radio link 4. The first cellular network 6 is coupled via a communications link 8 to the public switched telephone network (PSTN) 10 (e.g. the British Telecom network). The PSTN 10 is further coupled to a routing switch 27 via a communications link 22, and a further landline network 28 (e.g. the Cable and Wireless network) via a communications link 30. The PSTN 10 is also coupled to further cellular networks (e.g. Orange, Cellnet etc), of which for clarity only a second cellular network 16 (coupled via a communications link 14) is shown. The PSTN 10 is further coupled to a large number of direct subscribers each having a PSTN receiver (such as a telephone or a facsimile apparatus), of which for clarity only telephone 12 is shown in Figure 1. The second cellular network 16 provides service to a large number of user stations of which for clarity only a mobile telephone 20 coupled via a radio link 18 is shown.

The present embodiment will be described in relation to a call originating from the mobile telephone 2. In the present embodiment, when the user of the mobile telephone 2 selects the number of a required destination, it prefixes the selected number with an 'access prefix', which in this embodiment is a four digit code, which causes the call to be directed initially to the routing switch 27 via the first cellular network 6 and the PSTN 10. The routing switch 27 removes the access prefix, determines the most appropriate route through the various telecommunications networks for the call, and then routes the call over that appropriate route. In the present embodiment, the most appropriate route is the one that will cost the least to the user of the mobile telephone 2. For example, the least cost route to the telephone 12 may be via the further landline network 28 and then back to the PSTN 10 for final routing to the telephone 12. Other examples of determined routes, including routes going via second cellular network 16 will be described later in further embodiments.

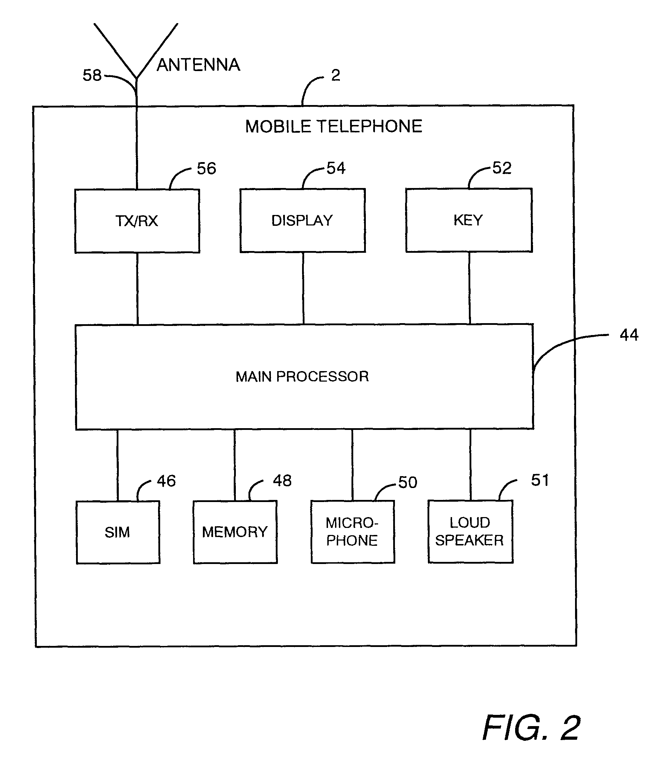

Further details of the mobile telephone will now be described with reference to Figure 2. As shown, the mobile telephone 2 comprises a main processor 44 which is coupled to a subscriber identification module (SIM) 46; a memory 48; a microphone 50 and loudspeaker 51 enabling the user to input voice and hear audio output; a user interface such as a keyboard 52 by which the user can input numbers to be called and other information and also can access and control various features of the mobile' telephone 2; a display 54 on which the number to be called and other information can be displayed; and a radio transmitter and receiver 56, coupled to an antenna 58, for transmitting and receiving communications from the first cellular network 6. In the present embodiment the mobile telephone 2 is compliant with the GSM standard.

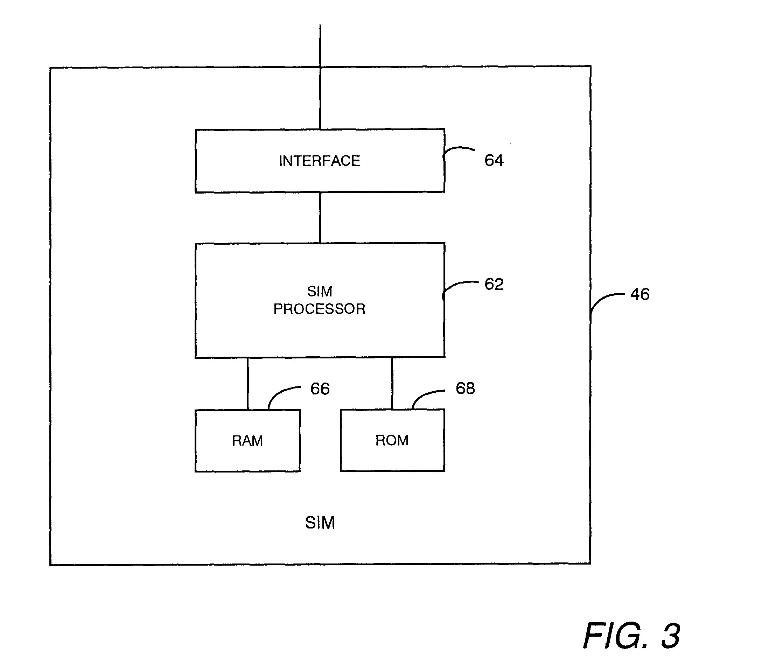

The SIM 46 is used to provide user-specific data and also algorithms and data specific to the cellular network providing the service to the mobile telephone. In the present embodiment, the SIM 46 is compatible with the processor 44 according to protocols specified in section 11.11 of the GSM specification. Further details of the SIM 46 will now be described with reference to Figure 3. As shown, the SIM 46 comprises a SIM processor 62 coupled to an interface 64 for interfacing the SIM processor 62 to the main processor 44 of the mobile telephone; a random-access-memory (RAM) 66 and a read-only-memory (ROM) 68.

In the present embodiment the SIM processor 62 is programmed to carry out the standard SIM procedures specified in section 11.11 of the GSM specification in a conventional fashion. The interface 64 is similarly compliant with section 11.11 of the GSM specification and thereby provides compatibility between the SIM 46 and the main processor 44 of the mobile telephone 2. The ROM 68 is a permanent memory containing start-up information employed by the SIM processor 62 on initial start-up. The RAM 66 is a non-volatile electrically-erasable memory which is employed by the SIM processor 62 as its working memory. Because the RAM 66 is non-volatile, i.e. its data is retained when the power is turned off, it is conveniently used to store effectively 'permanent' SIM information such as its unique international mobile subscriber identity number, the mobile telephone ISDN number (i.e. the international telephone number of the user of the mobile telephone) and internal authentication codes, and also to store 'semi-permanent' information such as telephone numbers stored by the user.

In the present embodiment, the SIM processor 62 and the RAM 66 of the SIM 46 and the main processor 44 of the mobile telephone 2 together implement a route-specifying function, as follows. Both the SIM 46 and the main processor 44 are programmed to perform a feature which is termed 'call control by SIM' which forms part of the 'SIM application took kit' and which is specified in section 11.14 of the GSM specification. According to this 'call control by SIM' function, digit strings selected by the user are first passed to the SIM 46 before being transmitted to the first cellular network 6. Then, under 'call control by SIM', the SIM has the ability to allow, bar or modify the call. The SIM also has the ability to replace a call request (i.e. dialled digit string) with another call request. In this embodiment, this functionality of the SIM and the main processor is used to control the appropriate routing of the call. In particular, the SIM 46 is programmed so that, after the input digit string has been passed to it under the 'call control by SIM' function, it inserts the earlier described four-digit access prefix to form a 'prefixed number' comprising the access prefix and the initial digit string, and then returns this prefixed number to the main processor 44 which then transmits it to the first cellular network 6.

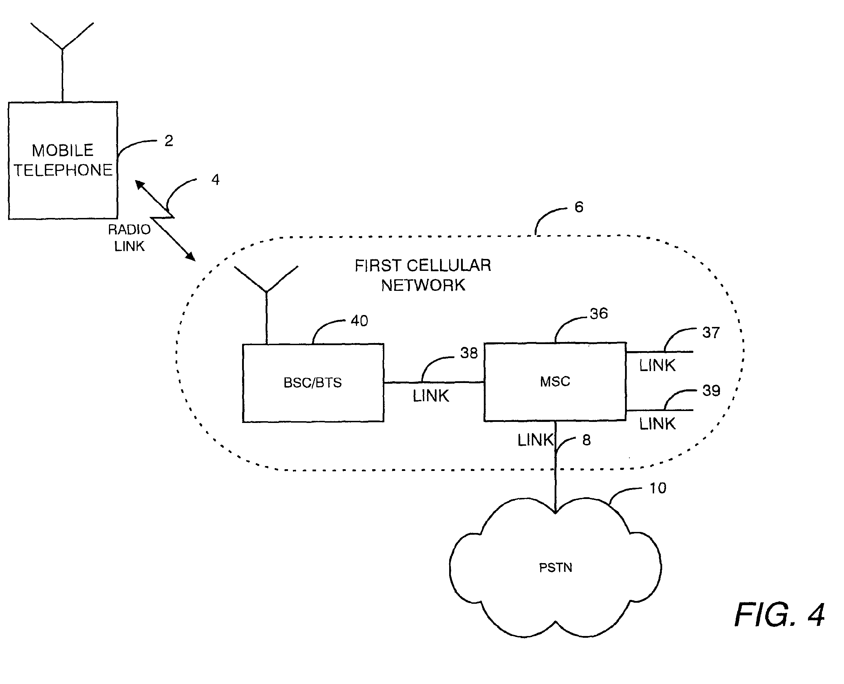

Figure 4 schematically illustrates further details of the first cellular network 6. As mentioned above, the service area of the first cellular network 6 is divided into a number of smaller areas called cells, each of which is served via a base transceiver station (BTS). In Figure 4 only the base transceiver station which is providing service to the mobile telephone 2 via the radio link 4 is shown, and in fact this base transceiver station is co-sited with a base station controller (BSC) thereby providing a joint base station controller/base transceiver controller (BSC/BTS) 40. The base station controller/base transceiver station 40 is coupled via a communications link 38 to a mobile services switching centre (MSC) 36, which itself is coupled to the PSTN 10 via the communications link 8. The mobile services switching centre 36 also provides service for a number of other joint base station controller/base transceiver stations via corresponding further communications links, of which only communications links 37 and 39 are illustrated in Figure 4.

In operation, when the above described call from the mobile telephone 2 is received by the base station controller/base transceiver station 40 it forwards it over link 38 to the mobile service switching centre 36. The mobile service switching centre 36 performs the switching function for the first cellular network 6, and in the present embodiment recognises the access prefix and causes the call to be forwarded to the PSTN over the communications link 8. Likewise, the PSTN 10 also recognises the access prefix and routes the call to the routing switch 27 via the communications link 22 shown in Figure 1.

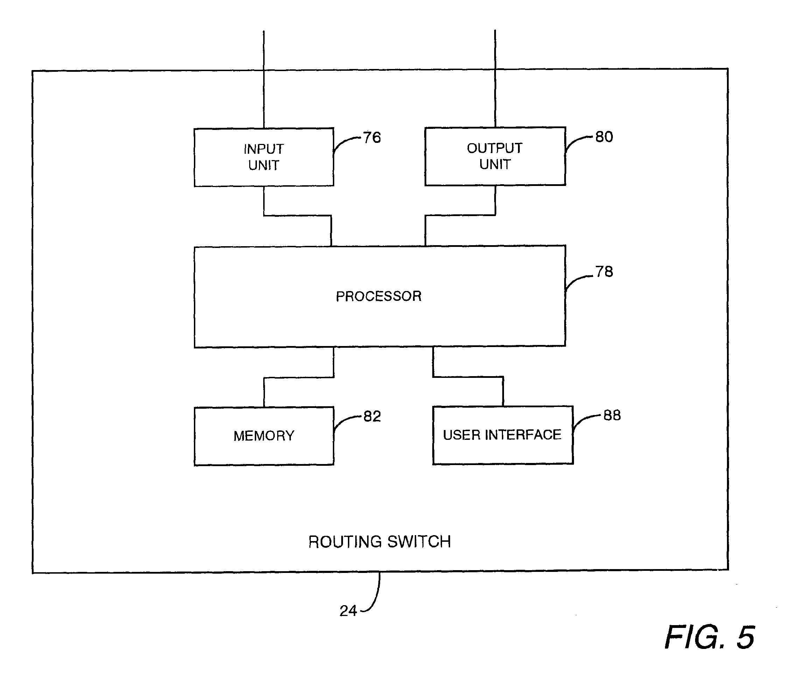

Further details of the routing switch 27 will now be described with reference to Figure 5. As shown, the routing switch 27 comprises a processor 78 which is coupled to an input unit 76, an output unit 80, a memory 82 and a user interface 88. In the present embodiment, the routing switch 27 is implemented in the form of a suitably programmed computer apparatus. In operation, when the routing switch 27 receives the prefixed telephone number for a call via the input unit 76, the processor 78 removes the access prefix digits and then compares at least the initial digits of the originally dialled telephone number, with routing information held in the memory 82.

In the present embodiment the routing switch processor 78 is programmed to determine the lowest cost route for each call. The memory 82 therefore contains data specifying the lowest cost route for each call as determined by that call's international and national dialling codes, further cross-referenced to the time of day and the network and location of the call originator. In this embodiment, this routing data is regularly updated by the operator of the routing switch 27 by inputting the updated information via the user interface 88. In this embodiment, after the routing switch processor 78 has determined the lowest cost route over the available networks, it then directly forwards the call over that route via the output unit 80.

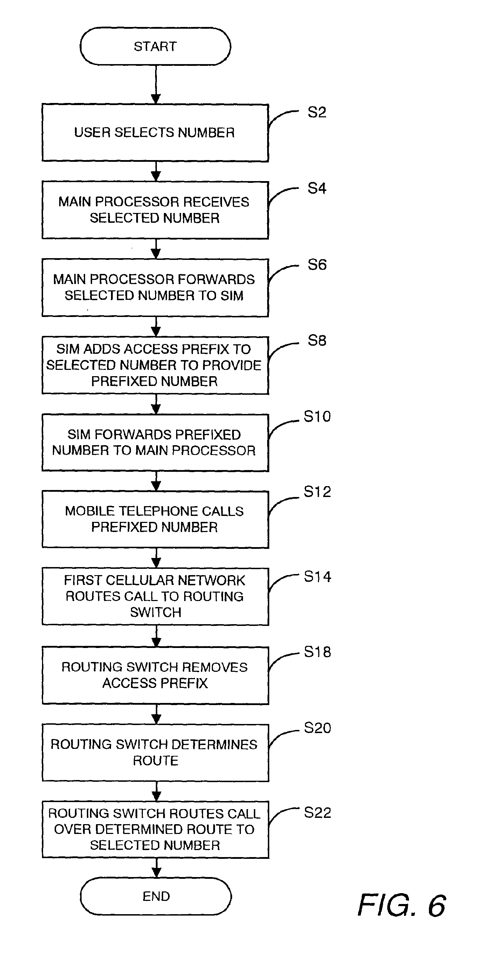

Details of the operation of the present embodiment will now be described with reference to Figure 6 which is a flow diagram illustrating the process steps employed. At step S2 the user of the mobile telephone 2 selects a number to be called, for example, by dialling (i.e. keying in) a new number using keyboard 52. At step S4 the main processor 44 receives the selected number, as follows. As the user keys in each digit, the main processor 44 controls the display to present the digits so far keyed in. When the user has keyed all of the digits, he presses a send button contained in keyboard 52. When this happens, the main processor is able to determine that the keyed-in digits it has so far received form the final version of the selected number. At step S6, the main processor forwards the selected number to the SIM 46 according to the 'call control by SIM function' as described earlier with reference to Figures 2 and 3. At step S8, the SIM 46 adds the four-digit access prefix to the selected number to provide a prefixed number. At step S10 the SIM 46 returns the prefixed number to the main processor 44.

At step S12 the main processor 44 controls the mobile telephone 2 in calling the prefixed number. The number is transmitted from the radio transmitter and receiver 56 via the antenna 58 over the radio link 4 where it is received by the joint base station controller/base transceiver station 40 of the first cellular network 6 in conventional manner.

At step S14 the first cellular network 6 routes the call to the routing switch 27. More particularly, the call is first forwarded from the joint base station controller/base transceiver station 40 via the communications link 38 to the mobile services switching centre 36. The mobile services switching centre (MSC) 36 analyses the called number and recognises the access prefix. In the present case MSC 36 compares the access prefix with look-up information it holds and this indicates to it that the call is to be routed to the routing switch 27. The mobile services switching centre (MSC) 36 further determines that it is to route the call to routing network 24 via the PSTN 10. When the PSTN 10 receives the call it similarly recognises the prefix and, following analysis of its own look-up tables, forwards the call to the routing switch 27 over the communications link 22, thus completing the directing of the call from the first cellular communications network 6 to the routing switch 27.

At step S18 the routing switch 27 removes the access prefix from the called number. At step S20 the routing switch 27 determines the appropriate (i.e. lowest cost) route for the call, in the manner described earlier with reference to Figure 5.

At step S22, the routing switch 27 directly routes the call over the determined route to the selected number. In the present example the originally dialled number corresponds to the telephone 12 coupled to the PSTN 10. Furthermore, in the present example, the routing switch 27 determines that the lowest cost route for the call is via the further landline network 28 then back to the PSTN 10 at the local exchange for the telephone 12. In the present embodiment, the routing switch 27 directly routes the call over the determined route by simply forwarding the connection and call request over the desired route.

This is known as 'single stage call set up'.

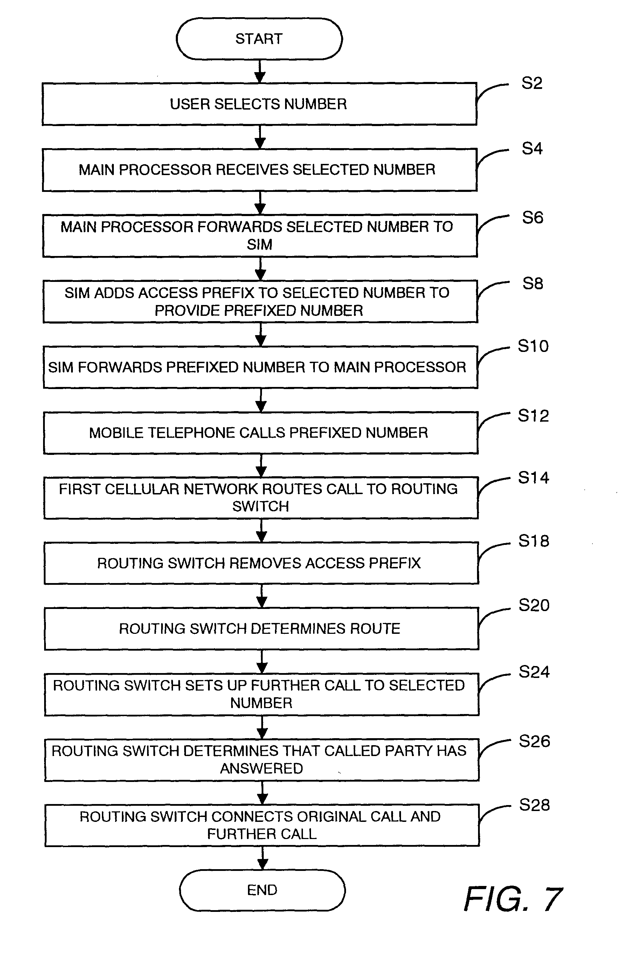

A second embodiment of a method of operating the communications arrangement will now be described with reference to Figure 7. In the second embodiment the method steps S2 to S20 are performed in the same way as with the first embodiment described above and will not, therefore, be described again. However, rather than employing 'single stage call set up', this embodiment employs a procedure called "two stage call set up", which will be described with reference to steps S24, S26 and S28 of Figure 7. In particular, at S24, the routing switch 27 does not directly forward the present call but instead sets up a further call to the selected number over the appropriate route. At step S26, the routing switch 27 determines that the called party at the selected number has answered. When the called party has indeed answered, then at step S28, the routing switch 27 connects together the original call and the further call thus completing the route.

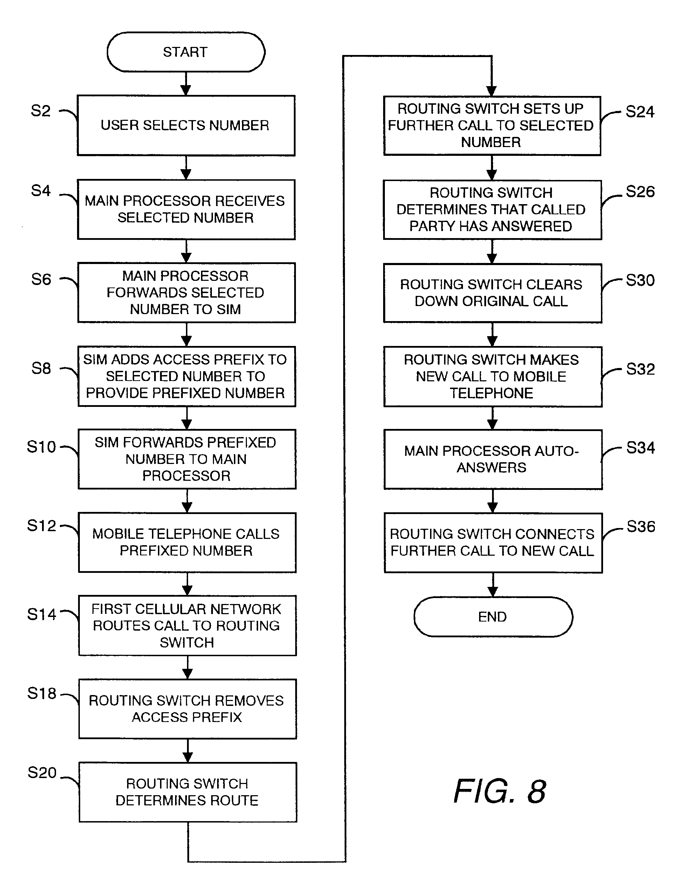

In a third embodiment of the method, rather than either 'single stage call set up' or 'two stage call set up' being employed, a procedure known as 'call back' could be employed for implementing the determined route. The process steps employed in such an embodiment are shown in Figure 8. Steps S2 to S20 and S24 and S26 are implemented in the same fashion as they were in the second embodiment and will not be described again. However, in this embodiment, after step S26, the procedure moves to step S30 where the routing switch clears down the original call as made by the mobile telephone 2. As is conventional in cellular networks, the first cellular network 6 will thus close down the call at the originating terminal i.e. the mobile telephone 2, in response to the routing switch clearing the call. Thus the mobile telephone 2 is made available to receive a call. At step S32, the routing switch 27 then makes a new call to the mobile telephone 2. At step S34, the mobile telephone 2 answers the call. This can be performed manually by the user of mobile telephone 2, however in this embodiment the main processor 44 is programmed to answer the call automatically. In this embodiment, the main processor 44 is controlled to do this by the SIM 46, which is pre-programmed to instruct the main processor 44 to auto-answer the next call received after a prefixed outgoing call has been closed down. Thereafter, at step S36, on determining that the mobile telephone 2 has answered the new call, the routing switch 27 connects this new call to the further call it has established at step S24, thus completing the whole of the route.

In the above embodiments, the SIM 46 cooperated with the main processor 44 of the mobile telephone 2 to prefix a four-digit access prefix to numbers selected by the user. Thereafter, the function of determining the lowest cost route was carried out by the routing switch 27. In the fourth embodiment of the present invention, some or all of the function of determining the lowest cost route is performed by corresponding functionality programmed into the SIM 46. In this embodiment, the SIM 46 has more than one choice of access prefixes, and chooses from them which access prefix to add to the user-selected number according to the choice of route it determines.

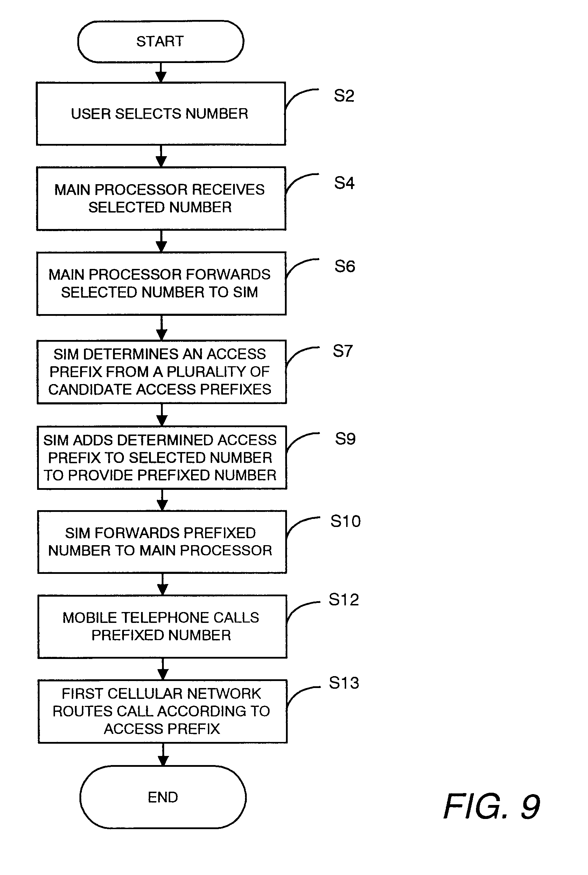

The fourth embodiment will now be described in further detail with reference to Figure 9 which is a flow diagram illustrating the process steps employed. Steps S2, S4 and S6 are carried out in the same way as with the earlier described embodiment and will not be described again. However, thereafter, at step S7 the SIM 46 determines an access prefix from a plurality of candidate access prefixes by carrying out the procedures of comparing the national and international dialling code of the destination telephone number, and time of day and location of the caller, with information stored in it in corresponding fashion to the procedures described earlier which were performed by the routing switch 27. In this embodiment, the routing data and the different access prefixes are loaded into the SIM before it is first used in the mobile telephone.

Thereafter, at step S9, the SIM 46 adds the determined access prefix to the selected number to provide the prefixed number. Step S9 therefore corresponds to step S8 of the previous embodiments. At step S10 the SIM 46 forwards the prefixed number to the main processor 44 and thereafter at step S12 the mobile telephone 2 calls the prefixed number, as was the case with the earlier described embodiments. Thereafter, at step S13 the first cellular network 6 routes the call according to the access prefix. This is performed in the same fashion as step S14 was performed in the earlier embodiments, however, in this embodiment, the call will not be directed to the routing switch 27 but will instead be directly routed to the destination via the route specified according to the prefixed number.

In the above embodiments, the routing switch selected the lowest cost route for the call. In other embodiments, other criteria can be employed. For example, the route providing the highest quality of service, or the route providing the most available bandwidth may be the criteria employed in other embodiments. In yet further embodiments, the routing switch may be programmed to route calls over a specific further landline network or other specific further network on the basis of a commercial agreement between the operators of the routing switch and such specific further networks.

In the above embodiments, the routing data stored in the memory of the routing switch was updated manually by operator input through the user interface. In other embodiments, this information may be updated automatically or semiautomatically via the input unit or any other suitable input.

In the above embodiments, the number to be called was selected by the user entering a new number via the keyboard of the mobile telephone. In other embodiments, the number to be called may be selected by a voice command or may be selected by retrieving the number from the user's phone book which is stored in either the main processor memory or the SIM memory.

In the above embodiments, the mobile telephone 2 display only displayed the selected number without including the prefix. This was consistent with the requirement for the user to press a send button on the keyboard of the mobile telephone. In other embodiments, in which other user procedures can be employed, such as automatic sending of the number without direct user interaction, the number could be displayed with or without the prefix.

In the above embodiments, although the first cellular network recognised the access prefix, it nevertheless forwarded the call to the PSTN 10 which finally diverted the call to the routing switch 27. This is the commercially preferred approach, however, and in other embodiments the first cellular network 6 itself may directly divert the call to the routing switch 27 over a suitable direct communications link.

In the above embodiments the routing switch 27 determined that the lowest cost route for a call intended for the telephone 12 was via the further landline network 28 and the PSTN 10. In other examples, the routing switch 27 may determine that the lowest route call is simply back through the PSTN 10. In other examples, the call may be intended for the further mobile telephone 20 coupled over radio link 18 to the second cellular network 16, all as shown in Figure 1. In this case the routing switch 27 may determine that the lowest cost route is via the further landline network 28 and the second cellular network 16, or alternatively back via the PSTN 10 and on to the second cellular network 16. It is to be appreciated that in the case of each possibility involving routing back through the PSTN 10, the routing switch 27 and/or the further landline network 28 will direct the call to the PSTN 10 such that it enters the PSTN 10 at a local exchange providing the lowest overall cost or other required criteria.

In the fourth embodiment described above, the SIM 46 determined an appropriate access prefix from a number of possibilities. In a further embodiment, the SIM 46 may have either one or more such choices plus a further choice of adding no access prefix in circumstances where no specific re-routing of the call will achieve cost reduction or improvements in any other criteria being applied.

In each of the above embodiments, a four digit access prefix was added to the start of the originally selected number. In other embodiments the number of digits may be other than four. Furthermore, the access code may be inserted within the digit string or at the end of the digit string of the originally selected number, provided its location is known in advance by the other elements of the routing system.

In each of the above embodiments, the main processor of the telephone passed all of the selected digits to the SIM 46 which then formed the prefixed number. In other embodiments, the main processor may be arranged to pass just some of the originally selected number to the SIM, and after the SIM returns those digits with the prefix, the main processor then adds the remaining digits before the call is made.

In the above described fourth embodiment, routing was fully determined by the SIM which then added a suitable prefix or access code in order for the call to be routed over the determined route. In other embodiments, the SIM may as one choice determine a routing prefix that routes the call to the routing switch for further decision making.

In all of the above embodiments, the necessary algorithms and data for the routing procedures are all programmed into the SIM 46 before it is first used in the mobile telephone 2, and thereafter the data is not updated. However, in other embodiments, this data may be replaced or revised after initial use by further algorithms and data which may be downloaded into the SIM 46. This downloading of the new data and algorithms may be performed whilst the SIM is in situ using data received over the cellular communications network or using a SIM programming module.

In the above embodiments, the different networks shown in Figure 1 are each implemented with separate hardware. It is to be appreciated however that in other embodiments, some or all of the components of two or more of the different networks shown, including either or both of the cellular networks, the routing network and one or more networks forming the further landline network, can be comprised partly or totally of hardware that is shared between one or more of the networks. In such a situation, the division between different networks can be determined or derived from any relevant organisational or commercial basis.

Furthermore, it is to be appreciated that the present invention can be applied to other arrangements of communications systems and networks. For example, more than one PSTN can be included; and the routing switch 27 can be directly coupled to either of the cellular networks shown or indeed further cellular networks not shown. Also, details of either of the cellular networks shown or indeed any other cellular networks can vary compared to the above embodiments, in particular by including alternative components serving the same or different roles compared to the joint base station controller/base transceiver station (BSC/BTS) 40 and/or the mobile services switching centre (MSC) 36. Similarly, the present invention can be applied to communications arrangements linking more than one country. For example, the further landline network may be replaced by an international telephone network, and the first cellular network may be a network a user is using whilst roaming, rather than being the user's home network.

With respect to the overall arrangement of networks and communications arrangements shown in Figure 1, it is also to be appreciated that other possible hierarchical and access format are possible. For example, in arrangements complying with UMTS, other public data networks may be employed other than the PSTN 10, and mobile packet switches may be employed rather than mobile services switching centres (MSCs).

In the above embodiments the original call is made from a mobile station comprising a mobile telephone. The present invention is however applicable to calls made from any other type of user station or terminal in a cellular communications system, including a mobile telephone comprising any sort of communication link with an appropriate external device such as a computer or electronic organizer. The invention is applicable to calls made for the purposes of transmitting speech and/or other information or data, including multimedia services such as facsimile, audio, video and so on. The call can also be a call intended for transmission over a route including a packetized data network such as the Internet.

In each of the above embodiments, a GSM compliant SIM as shown in Figure 3 was employed. It is to be appreciated that SIMS with other combinations of functionality can be employed in other embodiments of the invention, provided such SIMs provide any appropriate means for prefixing numbers selected by the host apparatus they are to be used in or with. Furthermore, as those skilled in the art of cellular communications arrangements will realise, the term 'SIM' as used in the description and claims is not limited to the GSM-specified item, but includes any appropriate module or circuit (or plural modules and/or circuits) that are incorporated into user stations to add client or network-specific data to the operation of a non-client-specific or non-network-specific user station apparatus.

Yet further, in other embodiments of the invention, all of the procedures described above as being shared between the SIM 46 and the main processor 44 of the mobile telephone 2 can in fact be performed solely by just the main processor 44 of the mobile telephone or alternatively by more than one processor of the mobile telephone, i.e. without any contribution by the SIM or indeed even in a mobile telephone that has no SIM at all.

## Claims

1. A cellular communications device for use with a cellular communications network, comprising:
selecting means for allowing a user to select a number to be called;
a controller for controlling communication operations of the cellular communications device and for receiving the selected number from the selecting means;
a SIM comprising:
a memory for storing an access code;
means for receiving some or all of the digits of the selected number from the controller,
modifying means for appending the stored access code to the selected number to provide a modified number, and
means for forwarding the modified number to the controller; and
transmitting means for transmitting the modified number to the cellular communications network.

2. A device according to claim 1, wherein the memory is further for storing routing data, and the device further comprises:
comparing means for comparing at least a specific part of the selected number with the routing data; and
determining means for determining which of a plurality of stored access codes is to be appended to the selected number dependent on the outcome of a comparison performed by the comparing means.

3. A device according to claim 1 or 2, wherein the memory is further for storing routing data, and the device further comprises:
comparing means for comparing information specific to the call with the routing data; and
determining means for determining which of a plurality of stored access codes is to be appended to the selected number dependent on the outcome of a comparison performed by the comparing means.

4. A device according to any of claims 1 to 3, wherein the memory is further for storing routing data, and the device further comprises:
comparing means for comparing at least a specific part of the selected number and other information specific to the call with the routing data; and
determining means for determining which of a plurality of stored access codes is to be appended to the selected number dependent on the outcome of a comparison performed by the comparing means.

5. A SIM for a cellular communications device, the SIM comprising:
a memory for storing an access code;
means for receiving, from the cellular communications device, some or all of the digits of a number selected by a user of the cellular communications device;
modifying means for appending the stored access code to the selected number to provide a modified number; and
means for forwarding the modified number to the cellular communications device.

6. A cellular communications device comprising a SIM according to claim 5 for modifying numbers selected by a user.

7. A communications system, comprising:
a cellular communications device according to any one of claims 1 to 4; and
a cellular communications network operable to receive a call to the modified number transmitted by the cellular communications device and to route the call through the cellular communications network in dependence upon the access code of the modified number.

8. A routing switch, comprising:
means for receiving a call originating from a cellular communications device of a cellular communications network and being specified by a modified number comprising a user-selected number and an access code appended to the user-selected number;
means for removing the access code from the modified number;
means for determining a route for the call; and
routing means for routing the call over the determined route.

9. A routing switch according to claim 8, further comprising a memory for storing routing data, and wherein the means for determining a route for the call comprises means for comparing at least a specific part of the selected number with the routing data.

10. A routing switch according to claim 8, further comprising a memory for storing routing data, and wherein the means for determining a route for the call comprises means for comparing information specific to the call with the routing data.

11. A routing switch according to claim 8, further comprising a memory for storing routing data, and wherein the means for determining a route for the call comprises means for comparing at least a specific part of the selected number and other information specific to the call with the routing data.

12. A routing switch according to any one of claims 8 to 11, wherein the routing means comprises means for routing the call directly over the determined route.

13. A routing switch according to any one of claims 8 to 11, wherein the routing means comprises:
means for setting up a new call to the user-selected number;
means for determining that the called party has answered the new call; and
means for connecting together the call originating from the cellular communications device and the new call.

14. A routing switch according to any one of claims 8 to 11, wherein the routing means comprises:
means for setting up a further call to the user-selected number;
means for determining that the called party has answered the further call;
means for clearing down the call originating from the cellular communications device;
means for making a new call to the cellular communications device;
means for determining that the cellular communications device has answered the new call; and
means for connecting the further call to the new call.

15. A communications system according to claim 7, further comprising a routing switch according to any one of claims 8 to 14, wherein the cellular communications network is adapted to route the call to the routing switch in accordance with the access code.

16. A method of operating a cellular communications device within a cellular communications network, comprising:
using a controller to control communication operations of the cellular communications device and to receive a user-selected number;
using a SIM to:
store an access code;
receive some or all of the digits of the selected number from the controller,
append the stored access code to the selected number to provide a modified number, and
forward the modified number to the controller;
and
transmitting the modified number to the cellular communications network.

17. A method according to claim 16, further comprising:
storing routing data;
comparing at least a specific part of the selected number with the routing data; and
determining which of a plurality of stored access codes is to be appended to the selected number dependent on the outcome of the comparing step.

18. A method according to claim 16, further comprising storing routing data;
comparing information specific to the call with the routing data; and
determining which of a plurality of stored access codes is to be appended to the selected number dependent on the outcome of the comparing step.

19. A method according to claim 16, further comprising storing routing data;
comparing at least a specific part of the selected number and other information specific to the call with the routing data; and
determining which of a plurality of stored access codes is to be appended to the selected number dependent on the outcome of the comparing step.

20. A cellular communications method, comprising:
a method according to any one of claims 16 to 19; and
a cellular communications network receiving a call to the modified number transmitted by the cellular communications device and routing the call through the cellular communications network in dependence upon the access code of the modified number.

21. A method of routing calls in a cellular communications system, comprising:
receiving a call originating from a cellular communications device of a cellular communications network and being specified by a modified number comprising a user-selected number and an access code appended to the user-selected number;
removing the access code from the modified number;
determining a route for the call; and
routing the call over the determined route.

22. A method according to claim 21, further comprising storing routing data, and wherein the step of determining a route for the call comprises comparing at least a specific part of the selected number with the routing data.

23. A method according to claim 21, further comprising storing routing data, and wherein the step of determining a route for the call comprises comparing information specific to the call with the routing data.

24. A method according to claim 21, further comprising storing routing data, and wherein the step of determining a route for the call comprises comparing at least a specific part of the selected number and other information specific to the call with the routing data.

25. A method according to any one of claims 21 to 24, wherein the routing step comprises routing the call directly over the determined route.

26. A method according to any one of claims 21 to 24, wherein the routing step comprises:
setting up a new call to the selected number;
determining that the called party has answered the new call; and
connecting together the original call and the new call.

27. A method according to any one of claims 21 to 24, wherein the routing step comprises:
setting up a further call to the selected number;
determining that the called party has answered the further call;
clearing down the original call from the user station;
making a new call to the user station;
determining that the user station has answered the new call; and
connecting the further call to the new call.

28. A cellular communications method according to claim 20, further comprising:
a method of routing calls according to any one of claims 21 to 27, and the cellular communications network routing the call to the routing switch in accordance with the access code.

29. A cellular communications method, comprising:
storing an access code at a cellular communications device;
appending the stored access code to a user-selected number to provide a modified number;
initiating a call by transmitting the modified number to the cellular communications network;
at the cellular communications network routing the call to a routing switch in dependence upon the access code;
at the routing switch, removing the access code from the modified number;
determining a route for the call; and
routing the call over the determined route.

30. A cellular communications device for use with a cellular communications network, comprising:
selecting means for allowing a user to select a number to be called;
a memory for storing an access code;
modifying means for appending the stored access code to the selected number to provide a modified number; and
transmitting means for transmitting the modified number to the cellular communications network.

31. A computer readable medium storing computer executable instructions for carrying out the method according to any of claims 16 to 19.

32. A computer readable medium storing computer executable instructions for controlling a processor to carry out the method of any of claims 21 to 27.

33. Computer executable process steps for controlling a processor to carry out the method according to any of claims 16 to 19.

34. Computer executable process steps for controlling a processor to carry out the method of any of claims 21 to 27.
